# EUROPEAN PATENT APPLICATION

(11) **EP 1 901 409 A2**
(43) Date of publication of application: **19.03.2008**
(21) Application number: 07017742.3
(22) Date of filing: 11.09.2007
(51) Int. Cl.: H02H 3/02

(54) **Apparatus and method for overload protection of electronic circuitry**

(30) Priority: 12.09.2006 US 520067
(71) Applicant: CREDENCE SYSTEMS CORPORATION, Milpitas, CA 95035 (US)
(72) Inventor: Richter, Klaus, 83352 Altenmarkt (DE)
(74) Representative: Ebner von Eschenbach, Jennifer

(57) **Abstract**

An apparatus and method for overload protection circuit. The apparatus includes a current limiting circuit that is coupled to a first node. A switching element is coupled in series to the current limiting circuit and to a second node. A voltage measurement circuit is coupled to the first and second nodes and is used for measuring a voltage across the first and second nodes. A control mechanism is coupled to the voltage measurement circuit and the switching element. The control mechanism opens the switching element when the voltage exceeds a predetermined value.

## Description

### TECHNICAL FIELD

Embodiments of the present disclosure relate to digital and mixed signal circuit testers. More specifically, embodiments of the present disclosure are related to the protection of automatic test equipment interfaces against distortion by devices under test.

### BACKGROUND ART

The use of automatic test equipment (ATE) to test digital circuits of a device under test (DUT) is an important part of manufacturing. Integrated circuit manufacturers routinely perform both logic and parametric tests on integrated circuits with the ATE. For example, logic tests stimulate various terminals of the DUT with input logic signals while monitoring various output signals by the ATE in response to the input logic signal stimulus to determine if the output signals exhibit expected logic patterns. Parametric tests measure analog characteristics of the DUT at its terminals.

When testing power devices, different levels of power are applied to the DUT. Specifically, various power sources are coupled to specific circuit terminals of the DUT. The ATE is capable of testing for power at expected circuit terminals of the DUT. That is, the ATE is designed to handle the power levels at those circuit terminals. In addition, various other sensitive precision measurement options provided by the ATE are coupled to other terminals of the DUT. That is, the ATE is also monitoring other circuit terminals (e.g., low voltage bus signal) that are not expected to have high power levels.

In the case of testing a defective DUT, the power applied to some DUT circuit terminals may be provided improperly to the circuit terminals handling sensitive precision measurement options. For example, there may be a direct short circuit from the circuit terminal handling high power to the circuit terminal handling the sensitive precision measurement options. As such, the higher power levels are improperly conducted to those circuit terminals handling precision measurement options. These improperly introduced higher power levels would damage the ATE.

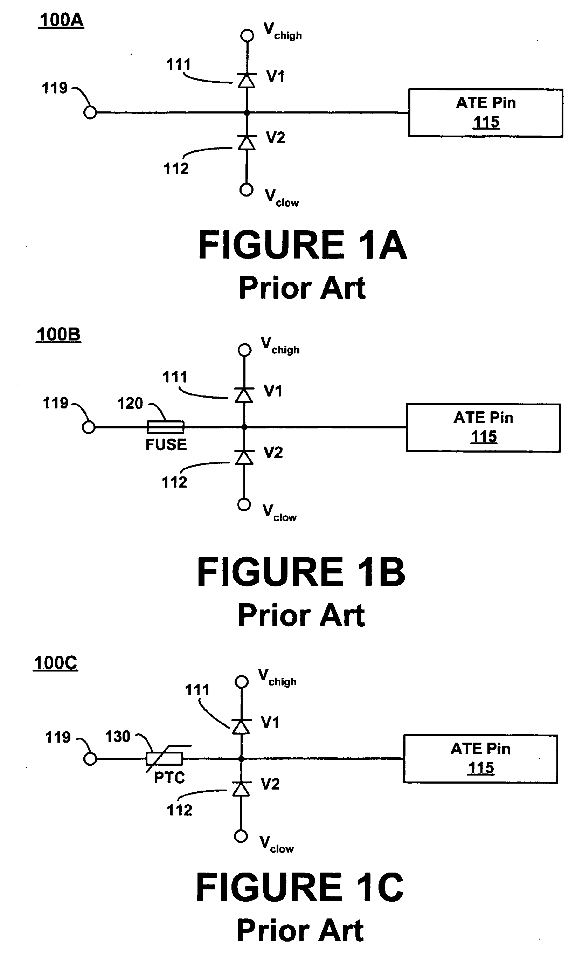

Prior Art Figures 1A, 1B, and 1C illustrate three solutions for preventing higher power levels from damaging an ATE. Each of these prior art solutions are ineffective from fully protecting the ATE from unexpected external stresses, such as higher voltages and current.

Prior Art Figure 1A discloses a circuit 100A that provides a clamp circuitry 110 for performing a voltage clamp. The clamp circuitry 100 includes a clamping diode 111 and a clamping diode 112. Specifically, clamping diode 111 prevents the input voltage signal at node 119 from rising above one diode voltage drop (e.g., 0.7 volts) above the high voltage clamp level (V_{chigh}). Also, clamping diode 112 prevents the input voltage signal at node 119 from falling below one diode voltage drop below the low voltage clamp level (V_{clow}).

However, clamping diodes 111 and 112 are associated with incompatible capacitances and leakage currents. In order for the clamp circuitry 110 to be able to withstand large power fluctuations, the diodes 111 and 112 would have to be prohibitively large. However, these larger diodes 111 and 112 are associated with larger capacitances and leakage currents which are not compatible with the ATE associated with ATE pin 115. As such, the circuit 100A is not suitable for providing overload protection.

Prior Art Figure 1B discloses a circuit 100B that includes the clamp circuitry 110 of Figure 1A. Circuit 100B also includes a melting fuse 120 preventing the diodes 111 and 112 from being destroyed. The melting fuse 120 will melt when a higher than expected voltage is applied across its terminals. As such, the melting fuse 120 creates an open circuit that protects diodes 111 and 112 and the ATE associated with ATE pin 115 from the higher voltage. However, the melting fuse 120 is normally too slow to protect the ATE. In addition, after the melting fuse 120 has been melted, the interface with the ATE pin 115 is rendered inoperable.

Prior Art Figure 1C discloses a circuit 100C that includes the clamp circuitry 110 of Figure 1A. Instead of the melting fuse 120 of Figure 1B, the circuit 100C includes a positive temperature coefficient (PTC) resistor 130. The PTC resistor 130 acts to protect the ATE associated with ATE pin 115 from higher voltages by creating an open circuit. In addition, once the fail condition is removed, the PTC resistor 130 will reset back to its original state.

However, several problems are associated with the PTC resistor 130. For instance, the PTC resistor 130 is also normally too slow to protect the ATE. Also, the series resistance is unacceptably high or unstable for use in interfacing with the ATE. Further, the PTC resistor 130 used for overload protection is not normally available for higher voltages (e.g., 100 volts). In addition, the PTC resistor 130 changes characteristics each time it acts to open the circuit to the ATE pin 115 due to high voltages. For example, the resistance of the PTC resistor 130 will increase each time it acts to open the circuit. As such, the PTC resistor 130 is limited in the number of times it can be used to provide overload protection in order ensure consistent operation of the PTC resistor 130 when protecting the ATE associated with the ATE pin 115.

### SUMMARY

An apparatus and method for overload protection circuit. The apparatus includes a current limiting circuit that is coupled to a first node. A switching element is coupled in series to the current limiting circuit and to a second node. A voltage measurement circuit is coupled to the first and second nodes and is used for measuring a voltage across the first and second nodes. A control mechanism is coupled to the voltage measurement circuit and the switching element. The control mechanism opens the switching element when the voltage exceeds a predetermined value.

### BRIEF DESCRIPTION OF THE DRAWINGS

The accompanying drawings, which are incorporated in and form a part of this specification, illustrate embodiments of the present invention and, together with the description, serve to explain the principles of the disclosure:

Prior Art Figure 1A is a circuit diagram of a voltage clamp circuit.

Prior Art Figure 1B is a circuit diagram of a voltage clamp circuit including a melting fuse.

Prior Art Figure 1C is a circuit diagram of a voltage clamp circuit including a positive temperature coefficient resistor.

Figure 2 is a circuit diagram illustrating a protection circuit including an overload protection circuit capable of limiting current, in accordance with one embodiment of the present disclosure.

Figure 3 is a circuit diagram of a unidirectional overload protection circuit of Figure 2, in accordance with one embodiment of the present disclosure.

Figure 4 is a circuit diagram illustrating a bi-directional overload protection circuit of Figure 2, in accordance with one embodiment of the present disclosure.

Figure 5 is a flow diagram illustrating steps in a method for providing overload protection, in accordance with one embodiment of the present disclosure.

### DETAILED DESCRIPTION

Reference will now be made in detail to the embodiments of the present disclosure,an apparatus and method for providing overload protection for electronic circuitry. While the disclosure will be described in conjunction with the embodiments, it will be understood that they are not intended to limit the disclosure to these embodiments.

Furthermore, in the following detailed description of the present disclosure, numerous specific details are set forth in order to provide a thorough understanding of the present disclosure. However, it will be recognized by one of ordinary skill in the art that the present disclosure may be practiced without these specific details. In other instances, well known methods, procedures, components, and circuits have not been described in detail as not to unnecessarily obscure aspects of the present disclosure.

Accordingly, embodiments of the present disclosure disclose an apparatus and method that provide for overload protection of test measurement devices from excessive power levels. Other embodiments of the present disclosure provide the above accomplishments and also provide for fast acting protection circuitry that protects ATE equipment from exposure to high current and voltages. Still other embodiments of the present disclosure provide the above accomplishments and also provide for an overload protection circuit that exhibits consistent characteristics over multiple uses.

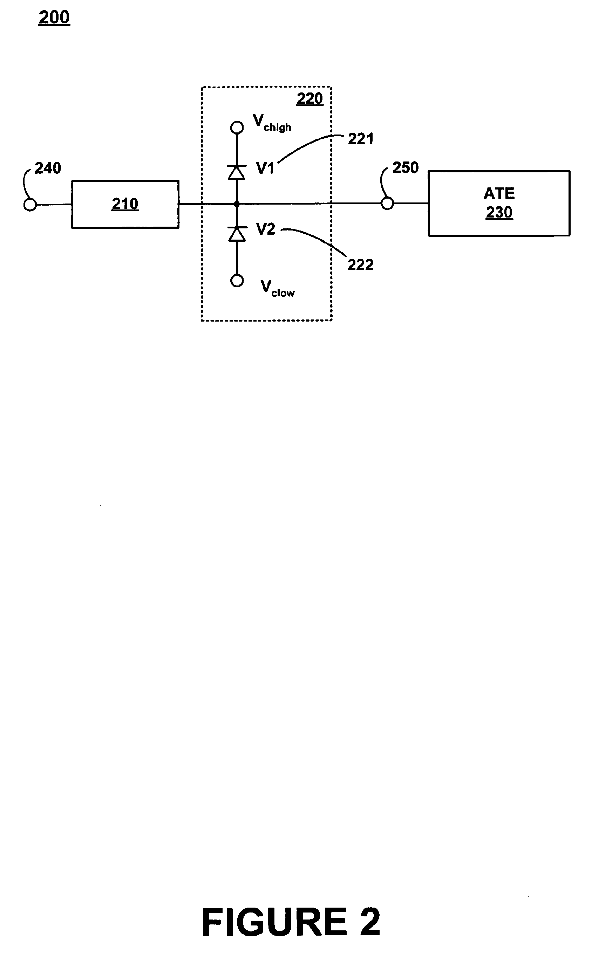

Figure 2 is a circuit diagram of a circuit 200 that provides overload protection, in accordance with one embodiment of the present disclosure. The present embodiment limits the current flowing into terminals of automatic test equipment (ATE), wherein the terminals provide for precision measurement options sensitive to high power levels. As such, the present embodiment protects these precision measurement options of the ATE from being damaged due to exposure to high power levels.

The circuit 200 comprises a clamping circuit 220 for performing a voltage clamp. The clamping circuit 220 is coupled to the node 250 to the ATE 230. The clamping circuit 220 prevents an output voltage at node 250 from swinging beyond a predetermined limit.

In particular, the clamp circuit 220 comprises a clamping diode 221 and a clamping diode 222. Specifically, clamping diode 221 prevents the input voltage signal at node 240 from rising above an upper limit, as presented to the node 250. The upper limit is defined as one diode voltage drop (e.g., 0.7 volts) above the high voltage clamp level (V_{chigh}), in one embodiment. The input voltage is generated from a device under test (DUT). Also, clamping diode 222 prevents the input voltage signal at node 240 from falling below a lower limit, as presented to node 250. The lower limit is defined as.one diode voltage drop below the low voltage clamp level (V_{clow}), in one embodiment.

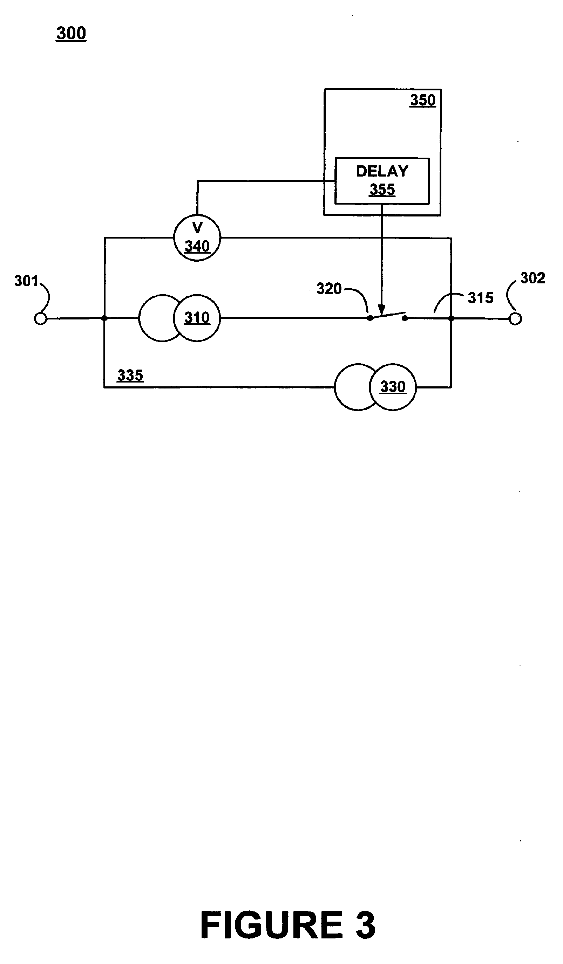

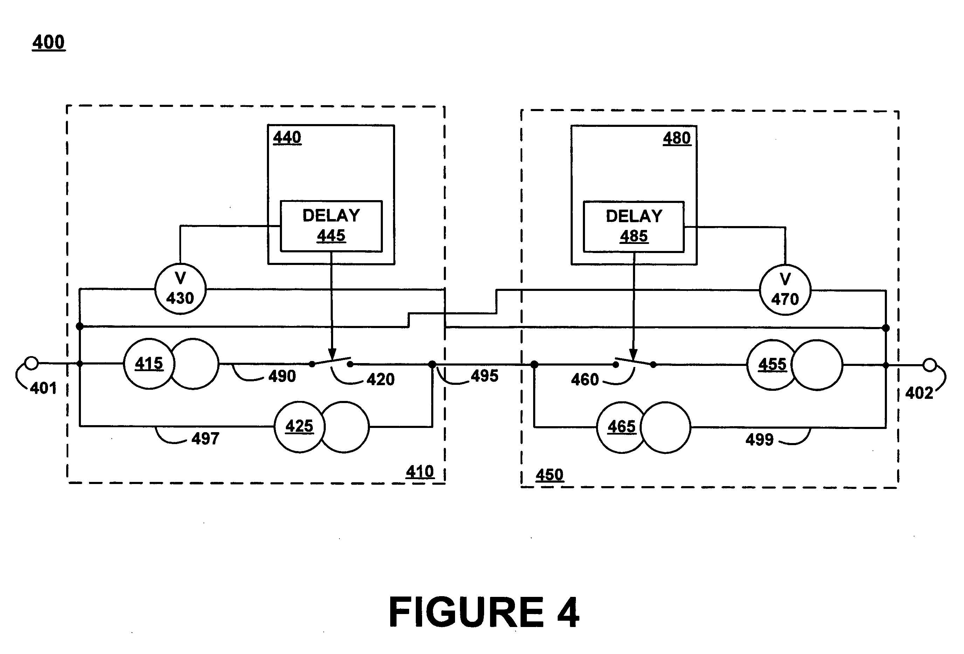

In addition, the circuit 200 comprises an overload protection circuit 210. The overload protection circuit 210 reduces the effects of a short term current pulse presented to the ATE 230 by the DUT. In addition, the overload protection circuit 210 is able to reset back to normal behavior after the short term current pulse is removed. Further details of the overload protection circuit 210 are provided in relation to Figures 3 and 4.

Figure 3 is a circuit diagram of an overload protection circuit 300 that is capable of limiting current flowing into terminals of an ATE that provide precision measurement options, in accordance with one embodiment of the present disclosure. The ATE tests a Device Under Test (DUT) by providing at least one signal out of a sensitive ATE pin to a circuit terminal of the circuit. The overload protection circuit 300 provides further details to the overload protection circuit 210 of Figure 2, in one embodiment.

For purposes of clarity and illustration only, a DUT is coupled to node 301 and a sensitive ATE pin of an ATE, that provides test measurement signals to the DUT, is coupled to node 302, in one embodiment. In another embodiment, the ATE is coupled to node 301 and the DUT is coupled to node 302.

The overload protection circuit 300 comprises a current limiting circuit 310 that is coupled to a first node 301. In one embodiment, the current limiting circuit 310 is a constant current source. As such, the current flowing in a main path 315 between the first node 301 and a second node 302 will be limited to the current provided by the current limiting circuit 310. In particular, the current limiting circuit 310 limits the current to a value that the clamping circuit 220 can handle. More specifically, the current limiting circuit 310 limits the current to a value that the diodes 221 and 222 can handle, in one embodiment.

For example, the current limiting circuit 310 limits the short term current pulse presented at node 301, as presented by the DUT. Even if the voltage at node 301 is greater than 100 volts, as generated by the short term current pulse, the current flowing to the node 302 will be limited to the current (e.g., 1 Ampere) allowable by the current limiting circuit 310.

In the example provided above, a limited current between nodes 301 and 302 of 1 Ampere combined with a voltage level of 100 volts at node 301 will generate approximately 100 Watts of power in the current limiting circuit. This power would necessitate some special layout design or a huge cooling environment for the current limiting circuit 310 if this condition persisted.

However, in the present embodiment the overload protection circuit 300 comprises a switching element 320 that is coupled in series to the current limiting circuit 310 and to the second node 302. As such, instead of dissipating the energy generated by the current limiting circuit 310, the switching element 320 limits the long term power dissipation to an acceptable value by creating an open circuit along the main path 315. As such, the switching element completely shuts off the current between nodes 301 and 302 in the main path after the voltage between nodes 310 and 302 exceeds a predetermined voltage value that the clamping circuit (e.g., circuit 220 of Figure 2) is unable to handle.

In one embodiment, the operations performed by the current limiting circuit 310 and the switching element 320 are performed by one component. For instance, in one embodiment, a field effect transistor (FET) comprises the current limiting circuit 310 and switching element 320.

The overload protection circuit also comprises a voltage measurement circuit 340 that helps determine when to engage the switching element 320. In particular, the voltage measurement circuit 340 measures the voltage across the first node 301 and the second node 302.

The circuit 300 also comprises a control mechanism 350 that controls the switching element 320. In particular, the control mechanism 350 is coupled to the voltage measurement circuit and receives the voltages that are measured across nodes 301 and 302.

Additionally, the control mechanism 350 is coupled to the switching element. The control mechanism 350 is capable of determining when the measured voltage across nodes 301 and 302 exceeds the predetermined voltage value. At that time, the control mechanism 350 is able to open the switching element 320 to create an open circuit along main path 315. This is accomplished to protect the current limiting circuit 310 from excessive power.

In accordance with another embodiment of the present disclosure, the control mechanism 350 comprises a delay circuit 355. In particular, the delay circuit 355 is coupled in series to the voltage measurement circuit 340 and the switching element. The delay circuit 355 measures the duration of time that the voltage across nodes 301 and 302 has exceeded the predetermined value needed to trigger the switching element 320. If the voltage across nodes 301 and 302 exceeds the predetermined value for a period of time, then the control mechanism 350 opens the switching element 320 to create an open circuit on the main path 315. The delay circuit 355 ensures that stray voltage spikes that may exceed the predetermined voltage value across nodes 301 and 302 do not prematurely trigger the switching element 320. More specifically, the clamping circuit 220 of Figure 2 is able to handle these stray current and voltage spikes.

In accordance with another embodiment, the overload protection circuit 300 comprises a reset current source 330. The reset current source 330 is coupled to the first node 301 and the second node 302 in a second path 335. The second path 335 is in parallel to the main path 315, in one embodiment.

In particular, the reset current source 330 conducts a reset current when the switching element 330 is open. The reset current source continually injects a small current between nodes 301 and 302 along the second path 335. As such, after the high voltage condition presented at node 301 is removed, the voltage measured between nodes 301 and 302 is associated with the current generated by the reset current source 330, since the main path 315 is still an open circuit. That is, the reset current source 330 will reset the voltage between nodes 301 and 302. This reset current is one that the clamping circuit 220 of Figure 2 is capable of handling, in one embodiment.

Furthermore, the control mechanism 350 is able to monitor when the voltage across nodes 301 and 302 has returned to the voltage level associated with the reset current source 330. As such, when the fail condition is removed at node 301, the control mechanism 350 is able to close the switching element 320 such that the main path 315 is now a closed path and capable of conduction.

Figure 4 is a circuit diagram of a bi-directional overload protection circuit 400 that is capable of limiting current flowing into and out of terminals of an ATE that provide precision measurement options, in accordance with one embodiment of the present disclosure. The overload protection circuit 400 provides further details to the overload protection circuit 210 of Figure 2, in one embodiment.

In one embodiment, the current limiting devices and switching elements incorporate a default direction for the current flow. In one direction of current flow, the current limiting devices and switching elements operate to provide current and switching operations. However in the opposite direction of current flow, the current limiting devices and the switching elements act as shorted circuits.

In particular, the bi-directional overload protection circuit 400 comprises two overload protection circuits 410 and 450, and is capable of accommodating currents flowing in either direction between nodes 401 and 402, in accordance with one embodiment of the present disclosure. For example, the overload protection circuit 410 acts to limit current flowing in a first direction from a first node 401 to a second node 402. In this case, the voltage between nodes 401 and 402 is positive for illustration purposes only. On the other hand, the overload protection circuit 450 acts to limit current flowing in a second direction from the second node 402 to the first node 401. As such, following the illustration above, the voltage between nodes 401 and 402 is negative.

For purposes of clarity and illustration only, a DUT is coupled to node 401 and an ATE, that provides test measurement signals to the DUT, is coupled to node 402, in one embodiment. In another embodiment, the ATE is coupled to node 401 and the DUT is coupled to node 402.

The first overload protection circuit 410 comprises a current limiting circuit 415 that is coupled to node 401 that limits the current flowing in the main path between nodes 401 and 402. In one embodiment, the current limiting circuit 410 is a constant current source. For example, the current limiting circuit 415 limits the short term current pulse presented at node 401 by the DUT.

In addition, the first overload protection circuit 410 also comprises a switching element 420 that is coupled in series to the current limiting circuit 415 and to an intermediate node 495. As such, the switching element 420 limits the long term power dissipation through the first overload protection circuit 410 to an acceptable value by creating an open circuit along the main path 490. In particular, the switching element 420 creates an open circuit along main path 490 and completely shuts off the current flowing between nodes 401 and 402 along main path 490. The switching element is activated after the voltage between nodes 401 and 402 exceeds a predetermined value.

The first overload protection circuit 410 also comprises a voltage measurement circuit 430 that measures the voltage across the nodes 401 and 402. The voltage is associated with the current flowing in the first direction from node 401 to node 402. As stated previously, the circuit components of overload protection circuit 450 act as shorted components when the current is flowing in the first direction between nodes 401 and 402.

The first overload protection circuit also comprises a control mechanism 440 that controls the switching element 420. In particular, the control mechanism 440 is coupled to the voltage measurement circuit 430 and receives the voltages that are measured across nodes 401 and 402.

Additionally, the control mechanism 440 is coupled to the switching element 420. As such, when the control mechanism 440 determines that the measured voltage for current flowing from node 401 to node 402 exceeds a first predetermined value, the control mechanism 440 is able to open the switching element 420 to create an open circuit along main path 490.

In accordance with one embodiment, the control mechanism comprises a delay circuit 445. In particular, delay circuit measures the duration of time that the voltage across nodes 401 and 402 has exceeded the first predetermined value needed to trigger the switching element 420. If the voltage across nodes 401 and 402 exceeds the first predetermined value for the period of time, then the control mechanism opens the switching element 420 to create an open circuit on the main path 490. This is to ensure that stray voltage spikes do not prematurely trigger the switching element 420.

In accordance with another embodiment, the overload protection circuit 410 also comprises a reset current source 425 that is coupled to the node 401 and to intermediate node 495 along a secondary path 497. In particular, the reset current source 425 conducts a reset current when the switching element 420 is open. As such, after the high voltage condition at node 401 is removed, the reset voltage measured between nodes 401 and 402 is associated with the current generated by the reset current source 425.

Further, the control mechanism 440 is able to detect that the voltage across nodes 401 and 402 has returned to a voltage level associated with the reset current source 425 after the fail condition at node 401 has been removed. Thereafter, the control mechanism is able to close the switching element 420 such that the main path 490 is capable of conducting.

The second overload protection circuit 450 comprises a current limiting circuit 455 that is coupled to node 402 that limits the current flowing in the main path between nodes 401 and 402. In one embodiment, the current limiting circuit 455 is a constant current source. For example, the current limiting circuit 455 limits the short term current pulse presented at node 402 by the ATE.

In addition, the second overload protection circuit 450 also comprises a switching element 460 that is coupled in series to the current limiting circuit 455 and to intermediate node 495. As such, the switching element 460 limits the long term power dissipation through the second overload protection circuit 450 to an acceptable value by creating an open circuit along the main path 490. In particular, the switching element 460 creates an open circuit along main path 490 and completely shuts off the current flowing between nodes 401 and 402 along main path 490. The switching element is activated after the voltage between nodes 401 and 402 exceeds a second predetermined value.

In one embodiment, the second predetermined value is identical to the absolute value of the first predetermined value used to engage the switching element 420. For instance, the first predetermined value is a positive value, while the second predetermined value is a negative value.

The second overload protection circuit 450 also comprises a voltage measurement circuit 470 that measures the voltage across the nodes 401 and 402. The voltage is associated with the current flowing in the second direction from node 402 to node 401. As stated previously, the circuit components of overload protection circuit 410 act as shorted components when the current is flowing in the second direction between nodes 401 and 402.

The second overload protection circuit also comprises a control mechanism 480 that controls the switching element 460. In particular, the control mechanism 480 is coupled to the voltage measurement circuit 470 and receives the voltages that are measured across nodes 401 and 402.

Additionally, the control mechanism 480 is coupled to the switching element 460. As such, when the control mechanism 480 determines that the measured voltage for current flowing in the second direction exceeds a second predetermined value (e.g., goes further in the negative direction), the control mechanism 480 is able to open the switching element 460 to create an open circuit along main path 490.

In accordance with one embodiment, the control mechanism comprises a delay circuit 485. In particular, delay circuit 485 measures the duration of time that the voltage across nodes 401 and 402 has exceeded the second predetermined value needed to trigger the switching element 460. If the voltage across nodes 401 and 402 exceeds the second predetermined value for the period of time, then the control mechanism 480 opens the switching element 460 to create an open circuit on the main path 490. This is to ensure that stray voltage spikes do not prematurely trigger the switching element 460.

In accordance with another embodiment, the overload protection circuit 480 also comprises a reset current source 465 that is coupled to the node 402 and to intermediate node 495 along a secondary path 499. In particular, the reset current source 465 conducts a reset current when the switching element 460 is open. As such, after the high voltage condition (e.g., high negative voltage) at node 402 is removed, the reset voltage measured between nodes 401 and 402 is associated with the current generated by the reset current source 465.

Further, the control mechanism 480 is able to detect that the voltage across nodes 401 and 402 has returned to a voltage level associated with the reset current source 465 after the fail condition at node 402 has been removed. Thereafter, the control mechanism 480 is able to close and reset the switching element 460 such that the main path 490 is capable of conducting.

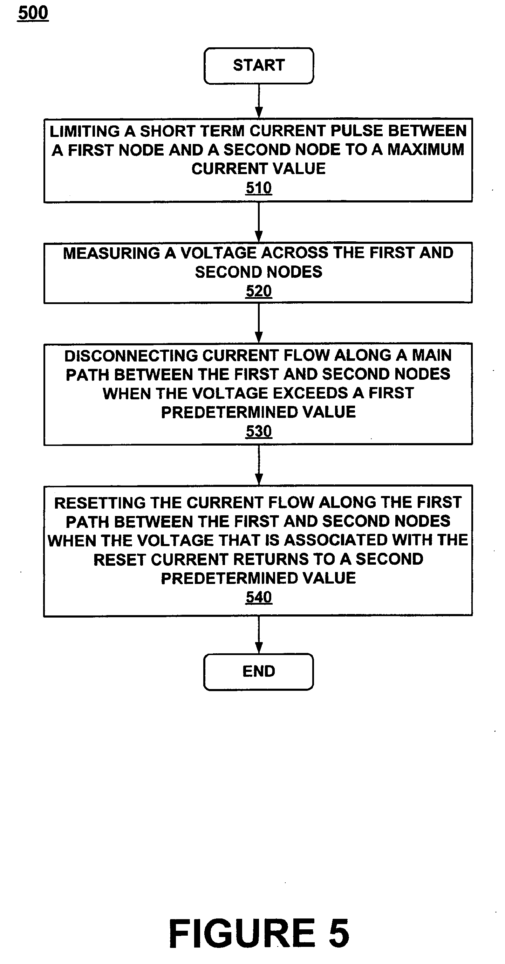

Figure 5 is a flow diagram 500 illustrating steps in a method for protecting a test measurement circuit. The flow diagram 500 is capable of implementing the functions provided by the overload protection circuits 300 and 400 of Figures 3 and 4, respectively, in accordance with embodiments of the present disclosure.

At 510, the present embodiment limits a short term current pulse between a first node and an second node to a maximum current value. For example, the current limiting circuit 310 of Figure 3 limits the short term current pulse across two nodes in a main path. This current between the two nodes is limited to a current value that a coupled clamping circuit is capable of handling.

At 520, the present embodiment measures a voltage across the first and second nodes. In particular, a voltage measurement circuit 340 of Figure 3 is capable of measuring the voltage.

At 530, the present embodiment disconnects current flow along a main path between the first and second nodes when the voltage exceeds a predetermined value. In particular, the control mechanism 350 of Figure 3 determines when the voltage measurement circuit 340 measures a voltage that exceeds the predetermined value. When this predetermined value is exceeded, the present embodiment, through the control mechanism 350, is capable of disconnecting the current flow along the main path.

In one embodiment, the current flow in the main path is disconnected after a delay period. That is the current flow is disconnected in the main path after the voltage across the first and second nodes is maintained above the first predetermined value for a period of time.

At 540, the present embodiment resets the current flow along the main path when the voltage returns to a manageable second predetermined level. The second predetermined level is associated with a reset current that is present along a second path between the first and second nodes. Specifically, the present embodiment provides a reset current on the second path that is in parallel with the main path.

In addition, the present embodiment provides for further overload protection. Specifically, the present embodiment clamps an output voltage from the second node from swinging beyond a predetermined limit. The second node is coupled to a DUT from at least one control signal delivered to the first node from an ATE.

In addition, the present embodiment is capable of providing bi-directional current overload protection. That is, the present embodiment is capable of providing overload protection when the current flows in either direction between the first and second nodes.

Accordingly, embodiments of the present disclosure disclose an apparatus and method that provide for overload protection of test measurement devices from excessive power levels. Other embodiments of the present disclosure provide the above accomplishments and also provide for fast acting protection circuitry that protects ATE equipment from exposure to high current and voltages. Still other embodiments of the present disclosure provide the above accomplishments and also provide for an overload protection circuit that exhibits consistent characteristics over multiple uses.

While the methods of embodiments illustrated in flow chart 500 shows specific sequences and quantity of steps, the present disclosure is suitable to alternative embodiments. For example, not all the steps provided for in the method are required for the present invention. Furthermore, additional steps can be added to the steps presented in the present embodiment. Likewise, the sequences of steps can be modified depending upon the application.

In summary, according to some of the aspects of the present disclosure, an apparatus and method for overload protection circuit are provided. The apparatus includes a current limiting circuit that is coupled to a first mode. A switching element is coupled in series to the current limiting circuit and to a second node. A voltage measurement circuit is coupled to the first and second nodes and is used for measuring a voltage across the first and second nodes. A control mechanism is coupled to the voltage measurement circuit and the switching element. The control mechanism opens the switching element when the voltage exceeds a predetermined value.

The foregoing descriptions of specific embodiments of the present invention have been presented for the purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various and various embodiments with various modifications are suited to the particular use contemplated. It is intended that the scope of the invention be defined by the claims appended hereto and their equivalents.

## Claims

1. An overload protection circuit, comprising:
a current limiting circuit coupled to a first node;
a switching element coupled in series to said current limiting circuit and to a second node;
a voltage measurement circuit for measuring a voltage across said first and second nodes; and
a control mechanism coupled to said voltage measurement circuit and said switching element for opening said switching element when said voltage exceeds a predetermined value.

2. The overload protection circuit of Claim 1, wherein said control mechanism further comprises:
a delay circuit coupled in series to said voltage measurement circuit and said switching element for opening said switching element when sad voltage exceeds said predetermined value for a period of time.

3. The overload protection circuit of Claim 1 or 2, further comprising;
a reset current source coupled to said first node and said second node for conducting a reset current when said switching element is open, wherein said control mechanism closes said switching element when said voltage returns to a second predetermined value associated with said reset current.

4. The overload protection circuit of any one of the previous claims, further comprising:
a test measurement circuit coupled to said second node for testing a device under test (DUT) by providing at least one signal from a sensitive automatic test equipment (ATE) pin to a circuit terminal of said DUT, wherein said first node is coupled to said circuit terminal.

5. The overload protection circuit of any one of the previous claims, further comprising:
a clamping circuit coupled in series to said second node and a test measurement circuit, wherein said clamping circuit prevents an output voltage form said second node from swinging beyond a predetermined limit.

6. The overload protection circuit of Claim 5, wherein said clamping circuit comprises:
an upper voltage source coupled to said second node through a first diode for providing an upper limit to said output voltage; and
a lower voltage source coupled to said second node through a second diode for providing a lower limit to said output voltage.

7. The overload protection circuit of any one of the previous claims, further comprising:
a field effect transistor comprising said first current limiting circuit and said switching element.

8. A bi-directional overload protection circuit, comprising:
a first overload protection circuit for controlling current flowing in a first direction between a first node and a second node, wherein said first overload protection circuit comprises:
a first current limiting circuit coupled to said first node;
a first switching element coupled in series to said first current limiting circuit and to an intermediate node;
a first voltage measurement circuit for measuring a voltage between said first node and said second node; and
a first control mechanism coupled to said first voltage measurement circuit and said first switching element for opening said switching element when said voltage exceeds a first predetermined value; and
a second overload protection circuit for controlling said current flowing in a second direction opposite said first direction between said first and second nodes, wherein said second overload protection circuit comprises:
a second current limiting circuit coupled to said intermediate node;
a second switching element coupled in series to said second current limiting circuit and to said second node;
a second voltage measurement circuit for measuring said voltage between said first node and said second node; and
a second control mechanism coupled to said second voltage measurement circuit and said second switching element for opening said second switching element when said second voltage exceeds a second predetermined value.

9. The bi-directional overload protection circuit of Claim 8, wherein said second overload protection circuit acts as a short when said current flows in said first direction.

10. The bi-directional overload protection circuit of Claim 8 or 9, wherein said first overload protection circuit acts as a short when said current flows in said second direction.

11. The bi-directional overload protection circuit of any one of claims 8 to 10, wherein said first control mechanism further comprises:
a first delay circuit coupled in series to said first voltage measurement circuit and said switching element for opening said switching element when said voltage exceeds said first predetermined value for a first period of time; and
wherein said second control mechanism further comprises:
a second delay circuit coupled in series to said second voltage measurement circuit and said second switching element for opening said switching element when said voltage exceeds said second predetermined value for a second period of time.

12. The bi-directional overload protection circuit of any one of claims 8 to 11, wherein said first overload protection circuit further comprises:
a reset current source coupled to said first node and said intermediate node for conducting a reset current when said first switching element is open, wherein said first control mechanism closes said first switching element when said voltage returns to a third predetermined value associated with said reset current.

13. The bi-directional overload protection circuit of any one of claims 8 to 12, wherein said second overload protection circuit comprises:
a reset current source coupled to said intermediate node and said second node for conducting a reset current when said second switching element is open, wherein said second control mechanism closes said second switching element when said second voltage returns to a third predetermined value associated with said reset current.

14. The bi-directional overload protection circuit of any one of claims 8 to 13, further comprising:
a test measurement circuit coupled to said second node for testing a DUT by providing at least one signal form a sensitive ATE pin to a circuit terminal of said DUT, wherein said first node is coupled to said circuit terminal.

15. The bi-directional overload protection circuit of any one of claims 8 to 14, further comprising:
a clamping circuit coupled in series to said second node and a test measurement circuit, wherein said clamping circuit prevents an output voltage from said second node from swinging beyond a predetermined limit.

16. A method of protecting a test measurement circuit, comprising:
limiting a short term current pulse between a first node and a second node to a maximum current value;
measuring a voltage across said first and second nodes;
disconnecting current flow along a main path between said first and second nodes when said voltage exceeds a first predetermined value; and
resetting said current flow along said first path between said first and second nodes when said voltage that is associated with said rest current returns to a second predetermined value.

17. The method of Claim 16, further comprising:
delaying said disconnecting current flow until said voltage is maintained above said first predetermined value for a period of time.

18. The method of Claim 16 or 17, wherein said resetting said current flow comprises:
providing a reset current on a second path in parallel with said main path between said first and second nodes; and
conducting said current flow on said main path when said voltage reaches said predetermined value that is associated with said reset current.

19. The method of any one of claims 16 to 18, further comprising:
providing a test signal from a sensitive ATE pin of a test measurement circuit coupled to said second node to a circuit terminal of a DUT that is coupled to said first node.

20. The method of any one of claims 16 to 19, further comprising:
providing bi-directional current overload protection, wherein said current pulse and said current flow are bi-directional.
